# EUROPÄISCHE PATENTANMELDUNG

(11) **EP 4 674 938 A1**
(43) Veröffentlichungstag der Anmeldung: **07.01.2026**
(21) Anmeldenummer: 24186484.2
(22) Anmeldetag: 04.07.2024
(51) Int. Cl.: C12C 7/04, C12C 7/06, C12C 7/16, C12C 7/165, C12C 7/14

(54) **BRAUVORRICHTUNG UND VERFAHREN ZUR HERSTELLUNG VON BRAUWÜRZE**

(71) Anmelder: ANDRITZ Separation GmbH, 51149 Köln (DE)
(72) Erfinder: WÜNSCHE, Thomas, 21514 Büchen (DE)
(74) Vertreter: Viering, Jentschura & Partner mbB Patent- und Rechtsanwälte

(57) **Zusammenfassung**

Brauvorrichtung 1 zur Herstellung von Brauwürze, aufweisend eine Mischpumpe 3, welche eingerichtet ist, um ihr zugeführte Flüssigkeit und ihr zugleich zugeführtes Malz in einem kontinuierlichen Durchgang durch sie hindurch gleichzeitig zu Vermischen und zu Pumpen, wobei das aus der Mischpumpe 3 austretende Flüssigkeit-Malz-Gemisch als Maische dient, eine Filtervorrichtung 9, welche einen Filtervorrichtungseingang 11 und einen Filtervorrichtungsausgang 13 aufweist, wobei die Filtervorrichtung 9 über eine an den Filtervorrichtungseingang 11 angeschlossene Maische-Zuführleitung 15 mit der Mischpumpe 3 verbunden ist, um die von der Mischpumpe 3 austretende Maische zu empfangen, und eingerichtet ist, um die empfangene Maische einem Filtervorgang zu unterziehen, mittels dessen aus der Maische ein Filtrat und ein in der Filtervorrichtung 9 verbleibender Filterkuchen erlangt werden, einen Aufnahmebehälter 17, der über eine Filtrat-Zuführleitung 21 mit der Filtervorrichtung 9 verbunden ist, um das aus der Filtervorrichtung 9 austretende Filtrat zu empfangen, und eine Filtrat-Rückführleitung 21, welche den Aufnahmebehälter 17 und den Filtervorrichtungseingang (11) miteinander verbindet, sodass das im Aufnahmebehälter 17 vorliegende Filtrat über den Filtervorrichtungseingang 11 zur Filtervorrichtung 9 rückführbar ist.

## Beschreibung

Die Erfindung betrifft eine Brauvorrichtung sowie ein Verfahren zur Herstellung von Brauwürze.

Es ist eine Aufgabe der Erfindung, eine Brauvorrichtung und ein Verfahren zur Herstellung von Brauwürze zu schaffen, mit denen in vereinfachter sowie zeitsparenderer Weise hochwertige Brauwürze herstellbar ist.

Dies wird erreicht durch eine Brauvorrichtung gemäß dem Anspruch 1 bzw. durch ein Verfahren gemäß dem Anspruch 6. Weiterbildungen der Erfindung sind in den abhängigen Ansprüchen beschrieben.

Die Erfindung stellt damit bereit eine Brauvorrichtung zur Herstellung von Brauwürze, welche aufweist eine Mischpumpe, optional eine High-Shear-Mischerpumpe, welche eingerichtet ist, um ihr zugeführte Flüssigkeit, optional Wasser, und ihr zugleich zugeführtes Malz, optional Malzschrot (z.B. gemahlenes und/oder geschrotetes Malzschrot), in einem kontinuierlichen Durchgang durch sie hindurch gleichzeitig zu Vermischen und zu Pumpen, wobei das aus der Mischpumpe austretende Flüssigkeit-Malz-Gemisch als Maische dient, eine Filtervorrichtung, optional eine Kammerpressfiltervorrichtung, welche einen Filtervorrichtungseingang und einen Filtervorrichtungsausgang aufweist, wobei die Filtervorrichtung über eine an den Filtervorrichtungseingang angeschlossene Maische-Zuführleitung mit der Mischpumpe verbunden ist, optional direkt verbunden ist, um die von der Mischpumpe austretende Maische zu empfangen, und eingerichtet ist, um die empfangene Maische einem Filtervorgang zu unterziehen, mittels dessen aus der Maische ein Filtrat und ein in der Filtervorrichtung verbleibender Filterkuchen erlangt werden, einen Aufnahmebehälter, der über eine Filtrat-Zuführleitung mit der Filtervorrichtung verbunden ist, optional direkt verbunden ist, um das aus der Filtervorrichtung austretende Filtrat zu empfangen, eine Filtrat-Rückführleitung, welche den Aufnahmebehälter und den Filtervorrichtungseingang miteinander verbindet, z.B. direkt oder indirekt, z.B. über die Maische-Zuführleitung, verbindet, sodass das im Aufnahmebehälter vorliegende Filtrat (direkt oder indirekt über z.B. die Maische-Zuführleitung) zum Filtervorrichtungseingang und damit zur Filtervorrichtung rückführbar ist, eine Pumpeneinrichtung, welche eingerichtet ist, um das Filtrat in einem Filtrat-Kreislauf, welcher von der Filtervorrichtung, der Filtrat-Zuführleitung, dem Aufnahmebehälter und der Filtrat-Rückführleitung (ggf. sowie wenigstens einem Abschnitt der Maische-Zuführleitung) gebildet wird, umlaufend zu pumpen, und eine Steuervorrichtung, welche mit der Pumpeneinrichtung verbunden ist und welche eingerichtet ist, um die Pumpeneinrichtung derart anzusteuern, dass diese das Filtrat zum kontinuierlichen Umlaufen in dem Filtrat-Kreislauf so lange pumpt, optional kontinuierlich pumpt, bis sich das Filtrat via gewünschten Stoffwechsel, z.B. Fermentation und/oder andere chemische/enzymatische und/oder physikalische Reaktionen, zu einer zur Weiterverarbeitung in einer Würzepfanne geeigneten Brauwürze umgewandelt hat.

Bei der Erfindung erfolgt das Mischen von Flüssigkeit und Malz nicht langwierig, diskontinuierlich in einer Maischepfanne, sondern beim kontinuierlichen Durchgang durch die Mischpumpe, so dass bei der Erfindung eine Maischepfanne entfallen kann, bzw. die erfindungsgemäße Brauvorrichtung ist/kann Maischepfanne-frei bzw. ohne Maischepfanne ausgebildet/ausgebildet sein. Die Erfinder haben ferner erkannt, dass im Rahmen des Kreislauf-Pumpens der Maische in dem von der Filtervorrichtung, dem Aufnahmebehälter und den diese verbindenden Leitungen (d.h. der Filtrat-Zuführleitung und der Filtrat-Rückführleitung (ggf. sowie wenigstens einem Abschnitt der Maische-Zuführleitung)) gebildeten Filtrat-Kreislauf eine hochwertige Brauwürze, d.h. eine Brauwürze von für die Weiterverarbeitung (in der Regel Weiterverarbeitung in einer Würzepfanne) erforderlicher Qualität, erzielbar. Hierbei kann gemäß der Erfindung auf einen Läuterbottich verzichtet werden; d.h. die erfindungsgemäße Brauvorrichtung ist/kann Läuterbottich-frei bzw. ohne Läuterbottich ausgebildet/ausgebildet sein. Durch ein Wegfallen von Maischefpanne und Läuterbottich entfallen bei der Erfindung auch die korrespondierenden Verweilzeiten in diesen Apparaturen, sodass das eine Zeitersparnis bei der Herstellung der Brauwürze erzielbar ist bzw. erzielt wird, und ferner ist die Brauvorrichtung gemäß der Erfindung durch dieses Wegfallen vereinfacht ausgebildet.

Die im Durchlauf durch die Mischpumpe auf Malz, Flüssigkeit und damit Maische ausgeübten Scherkräfte sind aufgrund der kurzen Verweildauer in der Mischpumpe im Vergleich zum Verweilen der Maische in einer Maischepfanne, in welcher ein Rührwerk beständig Scherkräfte auf die Maisch ausübt, als geringer einzuschätzen, wodurch Luftkontakt und damit Sauerstoffkontakt mit der Maische verringert werden, was die Qualität der Maische und damit der daraus gewonnenen Brauwürze verbessern kann.

Die Brauvorrichtung kann ferner aufweisen eine Heizeinrichtung, welche in der Filtrat-Rückführleitung angeordnet ist und von welcher das im Filtrat-Kreislauf umlaufend gepumpte Filtrat beheizbar ist (bzw. temperiert werden kann), wobei optional die Heizvorrichtung mit der Steuervorrichtung verbunden ist, welche eingerichtet ist, um die Heizvorrichtung zu steuern, wobei die Steuervorrichtung optional ferner derart eingerichtet ist, dass sie die Heizvorrichtung zum Erlangen eines gewünschten Temperaturprofils für das Filtrat ansteuern kann. D.h., mit der Heizeinrichtung ist ein Temperieren des Filtrats gemäß irgendeinem gewünschten Temperaturverlauf ermöglicht, womit unterschiedliche gewünschte Stoffwechsel in der Maische, dem Filtrat und dem Filterkuchen, die sich im Filtrat-Kreislauf befinden, ermöglicht werden. Ein Temperatur-Verlauf in der Maische bzw. im Filtrat kann z.B. wie folgt aufsteigend (`steigende Infusion`) sein, wobei bei der jeweiligen Temperatur bestimmte enzymatischen Umwandlungen im Filtrat stattfinden: bei 45° Filtrat-Temperatur bzw. Maische-Temperatur - Lipasen zum Fettabbau -> dann bei 55°C - Proteinasen zum Eiweißabbau -> dann bei 63° - beta-Amylasen zur Glukose/Maltose Erzeugung -> und dann bei 72° - alfa-Amylase zur Stärkekettentrennung. Der Temperaturverlauf kann z.B. auch wie folgt alternierend sein (`fallende Infusion`) 45°C -> 55°C -> 72° -> 63° (z.B. durch Zugabe von kaltem Brauwasser) -> 78°C (Enzymdeaktivierung).

Das erfindungsgemäße Verfahren zur Herstellung von Brauwürze, optional mittels einer wie in dieser Anmeldung beschriebenen Brauvorrichtung, weist auf gleichzeitiges Zuführen von Flüssigkeit, optional Wasser, und Malz, optional Malzschrot, welches durch Mahlen und/oder Schroten erlangt (worden) ist, zu einer Mischpumpe, optional einer High-Shear-Mischerpumpe, gleichzeitiges Mischen und Pumpen der zugeführten Flüssigkeit und des zugeführten Malzes mittels der Mischpumpe unter Herstellen eines als Maische dienenden Flüssigkeit-Malz-Gemisches im Rahmen eines kontinuierlichen Pumpenvorgangs durch die Mischpumpe hindurch, Zuführen der im Rahmen des kontinuierlichen Pumpendurchlaufs durch die Mischpumpe hergestellten Maische von der Mischpumpe zu einer Filtervorrichtung, mittels welcher die Maische einem Filtervorgang unterzogen wird, mittels dessen ein in der Filtervorrichtung verbleibender Filterkuchen und ein Filtrat erlangt werden, Zuführen des erlangten Filtrats von der Filtervorrichtung aus über eine Filtrat-Zuführleitung zu einem Aufnahmebehälter, Rückführen des Filtrats von dem Aufnahmebehälter aus über eine Filtrat-Rückführleitung zur Filtervorrichtung (z.B. zu einem Filtervorrichtungseingang der Filtervorrichtung) (z.B. direkt (z.B. direkt an den Filtervorrichtungseingang) oder indirekt (z.B. über eine Maische-Zuführleitung)), Pumpen, optional kontinuierliches Pumpen, des Filtrats mittels einer Pumpeneinrichtung in einem Filtrat-Kreislauf, der von der Filtervorrichtung, der Filtrat-Zuführleitung, dem Aufnahmebehälter und der Filtrat-Rückführleitung (ggf. sowie wenigstens einem Abschnitt der Maische-Zuführleitung) gebildet wird, solange bis sich das im Filtrat-Kreislauf via das Pumpen (im Filtrat-Kreislauf) umlaufende, optional kontinuierlich umlaufende, Filtrat via gewünschten Stoffwechsel, z.B. Fermentation und/oder andere chemische/enzymatische und/oder physikalische Reaktionen, zu einer zur Weiterverarbeitung geeigneten Brauwürze umgewandelt hat. Wie oben erläutert finden während des Umlauf-Pumpens des Filtrats im Filtrat-Kreislauf auch diverse andere gewünschte Stoffwechsel bzw. enzymatische Reaktionen und/oder physikalische Stoffprozessabläufe (wie z.B. ein Lösevorgang von Zucker in Flüssigkeit), z.B. jegliche gewünschten Stoffwechsel bzw. enzymatischen Reaktion, im Filtrat statt, um die gewünschte Brauwürze zu erlangen, wobei hierzu die gewünschten Temperatur-Verläufe im Filtrat eingestellt/gefahren werden bzw. werden können.

Die Erfindung wird nachfolgend anhand von Ausführbeispielen mit Bezugnahme auf die Zeichnung erläutert, wobei die Erfindung aber ersichtlich nicht auf diese Ausführungsbeispiele eingeschränkt ist. In der Zeichnung werden für gleiche Merkmale/Aspekte über alle Figuren hinweg die gleichen Bezugszeichen verwendet. In der Zeichnung zeigen:
Fig. 1 eine schematische Darstellung einer Brauvorrichtung zur Herstellung von Brauwürze gemäß einer Ausführungsform der Erfindung,
Fig. 2 eine schematische Darstellung einer Brauvorrichtung zur Herstellung von Brauwürze gemäß einer anderen Ausführungsform der Erfindung,
Fig. 3 eine schematische Darstellung einer Brauvorrichtung zur Herstellung von Brauwürze gemäß noch einer anderen Ausführungsform der Erfindung,
Fig. 4 eine schematische Darstellung einer Brauvorrichtung zur Herstellung von Brauwürze gemäß noch einer anderen Ausführungsform der Erfindung, und
Fig. 5 eine schematische Darstellung eines Verfahren zur Herstellung von Brauwürze gemäß einer Ausführungsform der Erfindung.

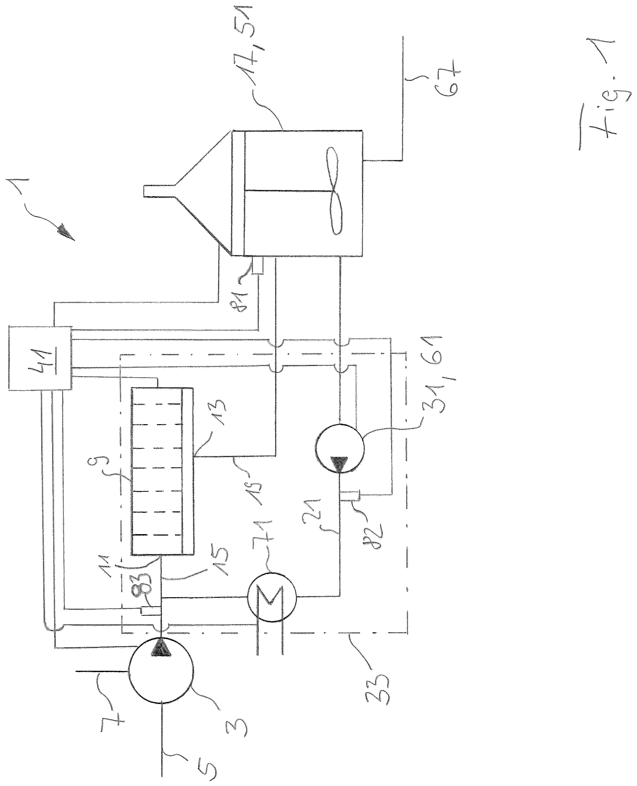

Die in Figuren 1-4 jeweils schematisch gezeigten Brauvorrichtungen 1 zur Herstellung von Brauwürze gemäß diversen Ausführungsbeispielen der Erfindung weisen jeweils auf eine Mischpumpe 3, optional eine High-Shear-Mischerpumpe, welche eingerichtet ist, um ihr über eine Flüssigkeit-Zuführleitung (bzw. über einen Flüssigkeit-Zuführleitungsstrang) 5 zugeführte Flüssigkeit, optional Wasser, und ihr zugleich über eine Malzzuführleitung (bzw. über einen Malzzuführleitungsstrang) 7 zugeführtes Malz, optional Malzschrot, in einem kontinuierlichen Durchgang durch sie hindurch gleichzeitig zu Vermischen und zu Pumpen, wobei das aus der Mischpumpe 3 austretende Flüssigkeit-Malz-Gemisch als Maische dient, eine Filtervorrichtung 9, optional eine Kammerpressfiltervorrichtung, welche einen Filtervorrichtungseingang 11 und einen Filtervorrichtungsausgang 13 aufweist, wobei die Filtervorrichtung 9 über eine an den Filtervorrichtungseingang 11 angeschlossene Maische-Zuführleitung 15 mit der Mischpumpe 3 verbunden ist, optional direkt verbunden ist, um die von der Mischpumpe 3 austretende Maische zu empfangen, und eingerichtet ist, um die empfangene Maische einem Filtervorgang zu unterziehen, mittels dessen aus der Maische ein Filtrat und ein in der Filtervorrichtung 9 verbleibender Filterkuchen erlangt werden, einen Aufnahmebehälter 17, der über eine Filtrat-Zuführleitung 19 mit der Filtervorrichtung 9 (via deren Filtervorrichtungsausgang 13) verbunden ist, optional direkt verbunden ist, um das aus der Filtervorrichtung 9 austretende Filtrat zu empfangen, eine Filtrat-Rückführleitung 21, welche den Aufnahmebehälter 17 und die Maische-Zuführleitung 15 miteinander verbindet, sodass das im Aufnahmebehälter 17 vorliegende Filtrat zu der Maische-Zuführleitung 15 und damit über den an diese angeschlossenen Filtervorrichtungseingang 11 zur Filtervorrichtung 9 rückführbar ist, eine Pumpeneinrichtung 31, welche eingerichtet ist, um das Filtrat in einem Filtrat-Kreislauf 33, welcher von der Filtervorrichtung 9, der Filtrat-Zuführleitung 19, dem Aufnahmebehälter 17 und der Filtrat-Rückführleitung 21 (sowie hier einem Abschnitt der Maische-Zuführleitung 15) gebildet wird, umlaufend zu pumpen, und eine Steuervorrichtung (z.B. eine elektronische Steuervorrichtung) 41, welche mit der Pumpeneinrichtung 31 verbunden ist und welche eingerichtet ist, um die Pumpeneinrichtung 31 derart anzusteuern, dass diese das Filtrat zum Umlaufen, optional zum kontinuierlichen Umlaufen, in dem Filtrat-Kreislauf 33 so lange pumpt, optional kontinuierlich pumpt, bis sich das Filtrat via gewünschten Stoffwechsel, z.B. Fermentation, etc., zu einer zur Weiterverarbeitung in einer Würzepfanne 51 geeigneten Brauwürze umgewandelt hat. Die Filtrat-Rückführleitung 21 kann auch direkt an den Filtervorrichtungseingang 11 angeschlossen sein, um direkt über diesen das Filtrat an die Filtervorrichtung 9 rückzuführen.

Bei der in Fig. 1 gezeigten Ausführungsform weist die Pumpeneinrichtung 31 eine im Filtrat-Kreislauf 33 angeordnete Filtrat-Kreislauf-Pumpe 61 auf, die von der Mischpumpe 3 verschieden ist. Z.B. werden im Betrieb der Brauvorrichtung 1 von Fig. 1, via den/die von der Steuervorrichtung 41 gesteuerten Steuervorgang/Steuervorgänge, die Mischpumpe 3 solange zum Pumpen angetrieben, bis sich eine gewünschte Menge an Maische in der Filtervorrichtung 9 bzw. im Filtrat-Kreislauf 33 befindet, danach die Mischpumpe 3 abgeschaltet und die Filtrat-Kreislauf-Pumpe 61 angetrieben, um das Filtrat im Filtrat-Kreislauf umlaufend zu pumpen, wobei in der vor allem in der Filtervorrichtung 9 vorliegenden Maische aber auch im umlaufend gepumpten Filtrat die gewünschten chemischen/enzymatischen und/oder physikalischen Reaktionen, z.B. Fermentation, Fettabbau, Eiweißabbau, Glukoseerzeugung, Zuckerauflösung etc., stattfinden, durch welche das Filtrat in die gewünschte Brauwürze umgewandelt wird. Bei der in Fig. 1 gezeigten Ausführungsform wird die Würzepfanne 51 vom Aufnahmebehälter 17 gebildet, welcher hierzu z.B. mit einem Rührwerk und sonstigen zur Weiterbehandlung der Brauwürze erforderlichen Einrichtungen ausgestattet ist. Beim Pumpen des Filtrats im Filtrat-Kreislauf 33 wird z.B. das Rührwerk im als Würzepfanne 51 dienenden Aufnahmebehälter 17 nicht betätigt. Nach dem Erlangen der Brauwürze wird das Pumpen des Filtrats im Filtrat-Kreislauf 33 gestoppt und das zur Brauwürze umgewandelte Filtrat verbleibt zur Weiterbehandlung im als Würzepfanne 51 dienenden Aufnahmebehälter 17, und kann nach abgeschlossener Weiterbehandlung über eine Würzepfanne-Abführleitung 67 zur Weiterverarbeitung aus dem als Würzepfanne 51 dienenden Aufnahmebehälter 17 abgeführt werden.

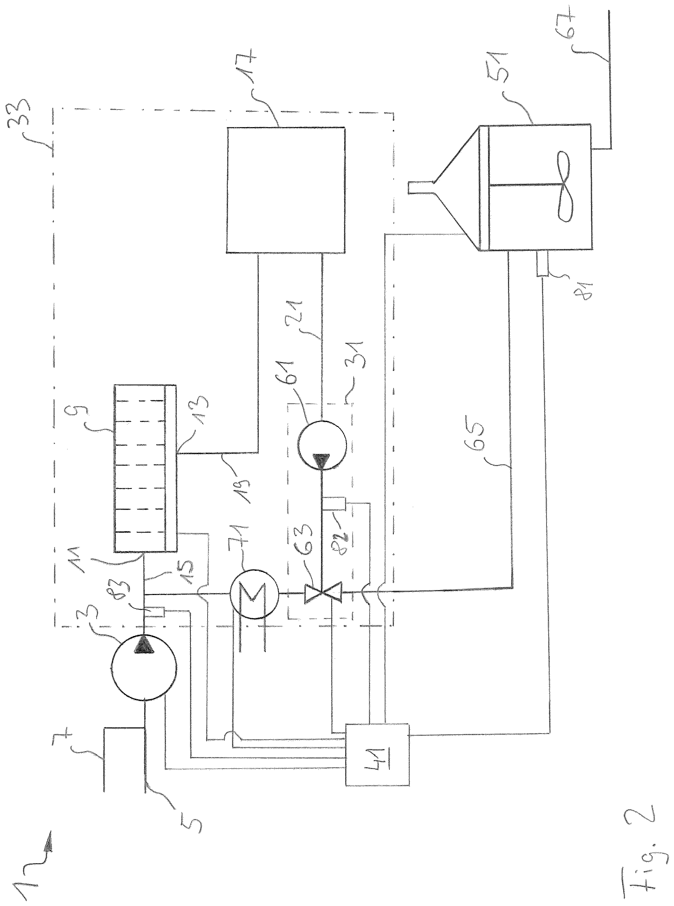

Bei der in Fig. 2 gezeigten Ausführungsform weist die Pumpeneinrichtung 31 auf eine im Filtrat-Kreislauf 33 angeordnete Filtrat-Kreislauf-Pumpe 61, die von der Mischpumpe 3 verschieden ist, und eine Ventileinrichtung 63, die in dem Filtrat-Kreislauf 33 angeordnet ist (hier der Filtrat-Kreislauf-Pumpe 61 nachgeschaltet) und die eingerichtet ist, um selektiv den Filtrat-Kreislauf 33 zu isolieren oder nach außerhalb des Filtrat-Kreislaufs 33 zu einer Filtrat-Abführleitung 65 hin zu öffnen, über welche der Filtrat-Kreislauf 33 mit der Würzepfanne 51 verbunden ist, um dieser das zuvor im Filtrat-Kreislauf 33 zu Brauwürze umgewandelte Filtrat zur Weiterbehandlung zuzuführen/zuführen zu können. Beim Zuführen des zu Brauwürze umgewandelten Filtrats zur Würzepfanne 51 kann mittels der Ventileinrichtung 63 der Filtrat-Kreislauf 33 unterbrochen werden, sodass in diesem Falle kein Filtrat mehr an die Filtervorrichtung 9 zurückgeführt wird/werden kann; zugleich kann z.B. der Filterkuchen aus der Filtervorrichtung 9 entnommen werden und damit die Filtervorrichtung 9 für die Wieder-Befüllung mit Maische vorbereitet werden. Z.B. werden im Betrieb der Brauvorrichtung 1 von Fig. 2, via den/die von der Steuervorrichtung 41 gesteuerten Steuervorgang/Steuervorgänge, die Mischpumpe 3 solange zum Pumpen angetrieben, bis sich eine gewünschte Menge an Maische in der Filtervorrichtung 9 bzw. im Filtrat-Kreislauf 33 befindet, danach die Mischpumpe 3 abgeschaltet und die Filtrat-Kreislauf-Pumpe 61 angetrieben, um das Filtrat im Filtrat-Kreislauf 33 umlaufend zu pumpen, wobei mittels der Ventileinrichtung 63 der Filtrat-Kreislauf 33 nach außen hin isoliert und innen nicht unterbrochen ist und wobei in der vor allem in der Filtervorrichtung 9 vorliegenden Maische aber auch im umlaufend gepumpten Filtrat die gewünschten chemischen/enzymatischen und/oder physikalischen Reaktionen, z.B. Fermentation, Fettabbau, Eiweißabbau, Glukoseerzeugung, Zuckerauflösung etc., stattfinden, durch welche das Filtrat in die gewünschte Brauwürze umgewandelt wird, und danach mittels der Ventileinrichtung 63 der Filtrat-Kreislauf 33 unterbrochen und zur Würzepfanne 51 hin geöffnet, um das nunmehr zu Brauwürze umgewandelte Filtrat der Würzepfanne 51 zuzuführen, die in dieser Ausführungsform vom Aufnahmebehälter 17 separat/verschieden ausgeführt/ausgebildet ist. Die in der Würzepfanne 51 weiterbehandelte Brauwürze kann zur Weiterverarbeitung über die Würzepfanne-Abführleitung 67 aus der Würzepfanne abgeführt werden.

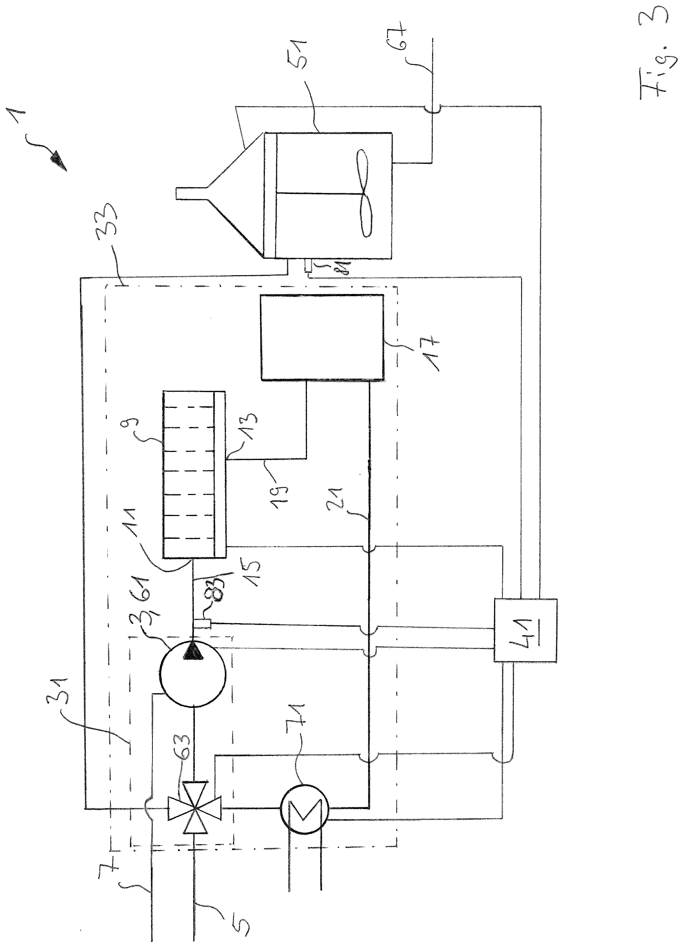

Bei der in Fig. 3 gezeigten Ausführungsform weist die Pumpeneinrichtung 31 auf eine im Filtrat-Kreislauf 33 angeordnete Filtrat-Kreislauf-Pumpe 61, die von der Mischpumpe 3 gebildet wird, und eine Ventileinrichtung 63, die in dem Filtrat-Kreislauf 33 angeordnet ist (hier der Filtrat-Kreislauf-Pumpe 61 vorgeschaltet) und die eingerichtet ist, um selektiv den Filtrat-Kreislauf 33 zu isolieren, nach außerhalb des Kreislaufs zu der Würzepfanne 51 hin zu öffnen oder nach außerhalb zur Flüssigkeitszuführleitung 5 und zur Malzzuführleitung 7 hin zu öffnen. Z.B. werden im Betrieb der Brauvorrichtung 1 von Fig. 3, via den/die von der Steuervorrichtung 41 gesteuerten Steuervorgang/Steuervorgänge, die Mischpumpe 3 solange zum Pumpen angetrieben, bis sich eine gewünschte Menge an Maische in der Filtervorrichtung 9 bzw. im Filtrat-Kreislauf 33 befindet, wobei mittels der Ventileinrichtung 63 die Verbindung der Flüssigkeitszuführleitung 5 und der Malzzuführleitung 7 zum Filtrat-Kreislauf 33 geöffnet ist, die Verbindung des Filtrat-Kreislaufs 33 zur Würzepfanne 51, die hier separat vom Aufnahmebehälter 17 ausgebildet ist, geschlossen ist und der Filtrat-Kreislauf 33 nicht unterbrochen ist, danach die Ventileinrichtung 63 zum Unterbrechen der Verbindung zwischen dem Filtrat-Kreislauf 3 zur Flüssigkeit-Zuführleitung 5 und zur Malz-Zuführleitung 7 angesteuert und die als Filtrat-Kreislauf-Pumpe 61 dienende Mischpumpe 3 weiter angetrieben, um das Filtrat im Filtrat-Kreislauf 33 umlaufend zu pumpen, wobei mittels der Ventileinrichtung 63 der Filtrat-Kreislauf 33 nach außen hin isoliert und innen nicht unterbrochen ist und wobei in der vor allem in der Filtervorrichtung 9 vorliegenden Maische aber auch im umlaufend gepumpten Filtrat die gewünschten chemischen/enzymatischen und/oder physikalischen Reaktionen, z.B. Fermentation, Fettabbau, Eiweißabbau, Glukoseerzeugung, Zuckerauflösung etc., stattfinden, durch welche das Filtrat in die gewünschte Brauwürze umgewandelt wird, danach mittels der Ventileinrichtung 63 der Filtrat-Kreislauf 33 unterbrochen und zur Würzepfanne 51 hin geöffnet, um das nunmehr zu Brauwürze umgewandelte Filtrat der Würzepfanne 51 zuzuführen. Die in der Würzepfanne 51 weiterbehandelte Brauwürze kann dann via die Würzepfanne-Abführleitung 67 aus der Würzepfanne 51 zur Weiterverarbeitung abgeführt werden.

Bei allen gezeigten Ausführungsformen gemäß den Figuren 1-4, weist die Brauvorrichtung 1 ferner eine Heizeinrichtung 71 auf, welche im Filtrat-Kreislauf 33, z.B. in der Filtrat-Rückführleitung 21, angeordnet ist und von welcher das im Filtrat-Kreislauf 21 umlaufend gepumpte Filtrat beheizbar ist. Bei den Ausführungsformen von Figuren 1 und 2 ist die Heizvorrichtung 71 z.B. stromabwärts der Filtrat-Kreislauf-Pumpe 61 und stromaufwärts der Maische-Zuführleitung 15 angeordnet, und bei der Ausführungsform von Fig. 3 ist die Heizvorrichtung 71 z.B. stromabwärts von dem Aufnahmebehälters 17 und stromaufwärts von der Pumpeneirichtung 31 angeordnet.

Bei allen Ausführungsformen gemäß den Figuren 1-4 ist die Heizvorrichtung 71 mit der Steuervorrichtung 41 verbunden, welche eingerichtet ist, um die Heizvorrichtung zu steuern, wobei die Steuervorrichtung 41 optional derart eingerichtet ist, dass sie die Heizvorrichtung 71 zum Erlangen eines gewünschten Temperaturprofils für das Filtrat ansteuern kann. Um die bei Temperaturprofilen mit alternierenden Temperaturverläufen (z.B. bei einer `fallenden Infusion`) die Temperatur des Filtrats im Filtrat-Kreislauf 33 schneller abzusenken, kann die Brauvorrichtung 1 z.B. auch mit einer im Filtrat-Kreislauf 33 vorgesehenen Kühleinrichtung (z.B. in Form eines Wärmetauschers) (nicht gezeigt) ausgestattet sein, die mit der Steuervorrichtung 41 verbunden ist, um von dieser gesteuert werden zu können. Es kann aber auch z.B. Flüssigkeit bzw. Brauwasser, z.B. über die Flüssigkeitszuführleitung 5 oder über eine nicht gezeigte zusätzliche Flüssigkeitsleitung (nicht gezeigt) zum Kühlen des Filtrats in den Filtrat-Kreislauf 33 in einer durch die Steuervorrichtung 41 gesteuerten Weise zugeführt werden, um den gewünschten Temperaturabfall (schneller) zu bewirken.

Bei allen Ausführungsformen gemäß den Figuren 1-4 ist die Brauvorrichtung 1 ferner mit einer Mehrzahl von Sensoren 81, 82, 83, wie z.B. Temperatur- und Durchflussrate-Sensoren, Drehzahlsensoren, etc., versehen, welche in den diversen Flüssigkeit- bzw. Maische-leitenden Leitungen und/oder in den Vorrichtungen/Einrichtungen der Brauvorrichtung 1 angeordnet und über Signalleitungen mit der Steuervorrichtung 41 verbunden sind und welche angeordnet und eingerichtet sind, um diverse Messgrößen der Brauvorrichtung 1, wie z.B. die Filtrat-Temperatur im Filtrat-Kreislauf 33, die Durchflussraten in der z.B. der Filtrat-Rückführleitung 21 und in der Filtrat-Zuführleitung 15, die Temperatur in der Würzepfanne 51, Pumpen-Drehzahlen, etc., zu erfassen und der Steuervorrichtung 41 korrespondierende Sensorsignale zuzuführen, auf Basis deren die Steuervorrichtung 41 die diversen Vorrichtungen/Einrichtungen der Brauvorrichtung 41, wie z.B. die Mischpumpe 3, die Heizvorrichtung 71, die Filtervorrichtung 9, die Würzepfanne 51, die Ventileinrichtung/en 63 steuern, optional automatisiert, ferner optional vollautomatisiert steuern, kann. Hierzu ist die Steuervorrichtung 41 über diverse Steuerleitungen mit diesen vorgenannten Vorrichtungen/Einrichtungen der Brauvorrichtung 1 verbunden.

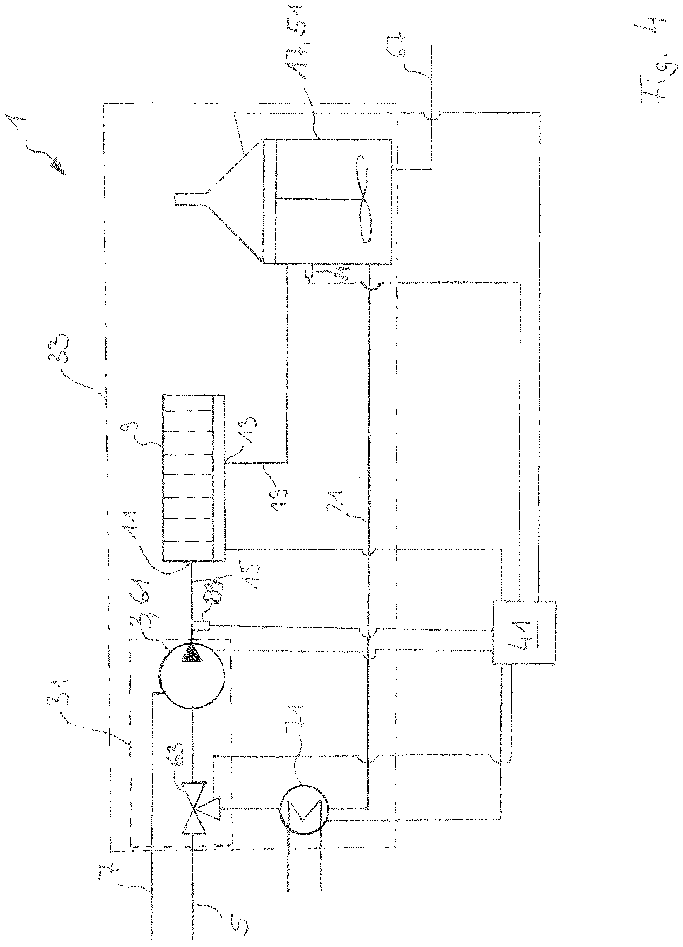

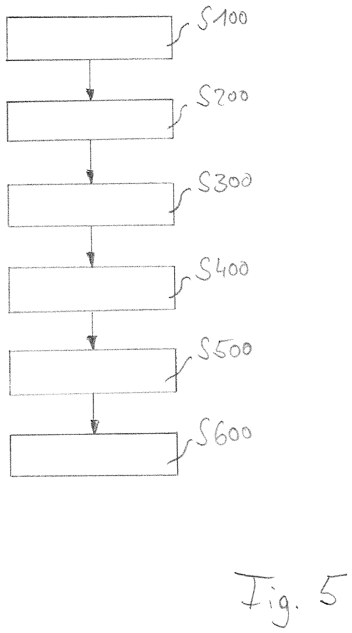

Fig. 4 zeigt schematisch eine Ausführungsform, welche zu jener von Fig. 3 ähnlich aufgebaut ist, sodass zur Erläuterung der Ausführungsform von Fig. 4 auf die obige Beschreibung der Ausführungsform von Fig. 3 verwiesen wird und nachfolgend nur die Unterschiede erläutert sind. Im Unterschied zur Ausführungsform von Fig. 3 sind bei der Brauvorrichtung 1 gemäß Fig. 4 der Aufnahmebehälter 17 und die Würzepfanne 51 nicht separat, sondern als derselbe Behälter ausgebildet. Damit wird bei der Ausführungsform von Fig. 4, wie z.B. auch bei in Fig. 1 gezeigten Ausführungsform, die im Filtrat-Kreislauf 33 aus dem Filtrat erlangte Brauwürze zur Weiterbehandlung in dem als Würzepfanne 51 dienenden Aufnahmebehälter aufbewahrt, wobei während der Zeit dieser Weiterbehandlung die Mischpumpe 3 gestoppt ist. Nach erfolgter Weiterbehandlung kann die Brauwürze dann via die Würzepfanne-Abführleitung 67 aus dem Aufnahmebehälter 17 zur Weiterverarbeitung abgeführt werden. Figur 5 zeigt schematisch ein Verfahren zur Herstellung von Brauwürze, optional mittels einer wie in dieser Anmeldung beschriebenen Brauvorrichtung 1, gemäß einer Ausführungsform der Erfindung, aufweisend gleichzeitiges Zuführen von Flüssigkeit, optional Wasser, und Malz, optional Malzschrot, zu einer Mischpumpe 3, optional einer High-Shear-Mischerpumpe, (S100), gleichzeitiges Mischen und Pumpen der zugeführten Flüssigkeit und des zugeführten Malzes mittels der Mischpumpe 3 unter Herstellen eines als Maische dienenden Flüssigkeit-Malz-Gemisches im Rahmen eines kontinuierlichen Pumpenvorgangs durch die Mischpumpe hindurch (S200), Zuführen der im Rahmen des kontinuierlichen Pumpendurchlaufs durch die Mischpumpe 3 hergestellten Maische von der Mischpumpe 3 zu einer Filtervorrichtung 9, mittels welcher die Maische einem Filtervorgang unterzogen wird, mittels dessen ein in der Filtervorrichtung 9 verbleibender Filterkuchen und ein Filtrat erlangt werden (S300), Zuführen des erlangten Filtrats von der Filtervorrichtung 9 aus über eine Filtrat-Zuführleitung zu einem Aufnahmebehälter 17 (S400), Rückführen des Filtrats von dem Aufnahmebehälter 17 aus über eine Filtrat-Rückführleitung 21 zurück zur Filtervorrichtung 9 (z.B. direkt über einen Filtervorrichtungseingang 11 oder z.B. indirekt über eine an den Filtervorrichtungseingang 11 angeschlossene Maische-Zuführleitung 15 (S500)), Pumpen des Filtrats mittels einer Pumpeneinrichtung 31 in einem Filtrat-Kreislauf 33, der von der Filtervorrichtung 9, der Filtrat-Zuführleitung 15, dem Aufnahmebehälter 17 und der Filtrat-Rückführleitung 21 (sowie ggf. von einem Abschnitt der Maische-Zuführleitung 15) gebildet wird, solange bis sich das im Filtrat-Kreislauf 33 via das Pumpen umlaufende Filtrat via gewünschten Stoffwechsel zu einer zur Weiterverarbeitung geeigneten Brauwürze umgewandelt hat (S600).

## Patentansprüche

1. Brauvorrichtung (1) zur Herstellung von Brauwürze, aufweisend
- eine Mischpumpe (3), optional eine High-Shear-Mischerpumpe, welche eingerichtet ist, um ihr zugeführte Flüssigkeit, optional Wasser, und ihr zugleich zugeführtes Malz, optional Malzschrot, in einem kontinuierlichen Durchgang durch sie hindurch gleichzeitig zu Vermischen und zu Pumpen, wobei das aus der Mischpumpe (3) austretende Flüssigkeit-Malz-Gemisch als Maische dient,
- eine Filtervorrichtung (9), optional eine Kammerpressfiltervorrichtung, welche einen Filtervorrichtungseingang (11) und einen Filtervorrichtungsausgang (13) aufweist, wobei die Filtervorrichtung (9) über eine an den Filtervorrichtungseingang (11) angeschlossene Maische-Zuführleitung (15) mit der Mischpumpe (3) verbunden ist, optional direkt verbunden ist, um die von der Mischpumpe (3) austretende Maische zu empfangen, und eingerichtet ist, um die empfangene Maische einem Filtervorgang zu unterziehen, mittels dessen aus der Maische ein Filtrat und ein in der Filtervorrichtung (9) verbleibender Filterkuchen erlangt werden,
- einen Aufnahmebehälter (17), der über eine Filtrat-Zuführleitung (19) mit der Filtervorrichtung (9) verbunden ist, optional direkt verbunden ist, um das aus der Filtervorrichtung (9) austretende Filtrat zu empfangen,
- eine Filtrat-Rückführleitung (21), welche den Aufnahmebehälter (17) und den Filtervorrichtungseingang (11) miteinander verbindet, sodass das im Aufnahmebehälter (17) vorliegende Filtrat über den Filtervorrichtungseingang (11) zur Filtervorrichtung (9) rückführbar ist,
- eine Pumpeneinrichtung (31), welche eingerichtet ist, um das Filtrat in einem Filtrat-Kreislauf (33), welcher von der Filtervorrichtung (9), der Filtrat-Zuführleitung (19), dem Aufnahmebehälter (17) und der Filtrat-Rückführleitung (21) gebildet wird, umlaufend zu pumpen, und
- eine Steuervorrichtung (41), welche mit der Pumpeneinrichtung (31) verbunden ist und welche eingerichtet ist, um die Pumpeneinrichtung (31) derart anzusteuern, dass diese das Filtrat zum Umlaufen, optional zum kontinuierlichen Umlaufen, in dem Filtrat-Kreislauf so lange pumpt, optional kontinuierlich pumpt, bis sich das Filtrat via gewünschten Stoffwechsel zu einer zur Weiterverarbeitung in einer Würzepfanne (51) geeigneten Brauwürze umgewandelt hat.

2. Brauvorrichtung (1) gemäß Anspruch 1, wobei die Pumpeneinrichtung (31) eine im Filtrat-Kreislauf (33) angeordnete Filtrat-Kreislauf-Pumpe (61) aufweist, die von der Mischpumpe (3) verschieden ist oder die von der Mischpumpe (3) gebildet wird, wobei die Pumpeneinrichtung (31) optional eine oder mehrere Ventileinrichtungen (63) hat, die in dem Filtrat-Kreislauf (33) angeordnet ist/sind und die eingerichtet ist/sind, um selektiv den Filtrat-Kreislauf (33) zu isolieren oder nach außerhalb des Filtrat-Kreislaufs (33) zu öffnen.

3. Brauvorrichtung (1) gemäß Anspruch 1 oder 2, ferner aufweisend eine Würzepfanne (51), die entweder
- von dem Aufnahmebehälter (17) gebildet wird, wobei nach Erhalt der geeigneten Brauwürze diese dann im als Würzepfanne (51) dienenden Aufnahmebehälter (17) aufbewahrt und weiterbehandelt werden kann, oder
- von dem Aufnahmebehälter (17) verschieden ist und über eine Brauwürze-Zuführleitung (65) mit dem Filtrat-Kreislauf (33), optional mit dem Aufnahmebehälter (17), verbunden ist, um von diesem die Brauwürze zu empfangen, wobei optional der Aufnahmebehälter (17) als rührwerkfreier Aufnahmebehälter ausgebildet ist.

4. Brauvorrichtung (1) gemäß einem der Ansprüche 1 bis 3, ferner aufweisend eine Heizeinrichtung (71), welche in der Filtrat-Rückführleitung (21) angeordnet ist und von welcher das im Filtrat-Kreislauf (33) umlaufend gepumpte Filtrat beheizbar ist, wobei optional die Heizvorrichtung (71) mit der Steuervorrichtung (41) verbunden ist, welche eingerichtet ist, um die Heizvorrichtung (71) zu steuern, wobei die Steuervorrichtung (41) optional ferner derart eingerichtet ist, dass sie die Heizvorrichtung (9) zum Erlangen eines gewünschten Temperaturprofils für das Filtrat ansteuern kann.

5. Brauvorrichtung (1) gemäß einem der Ansprüche 1 bis 4, wobei die Steuervorrichtung (9) ferner derart eingerichtet ist, dass von ihr die Brauvorrichtung (1) derart steuerbar ist, dass mittels der Mischpumpe (3) die Maische an die Filtervorrichtung (9) derart für eine vorbestimmte Zeit zugeführt wird, dass das Pumpen des Filtrats im Filtrat-Kreislauf (33) zeitlich zumindest größtenteils, optional komplett, ohne weitere Zuführung von Maische an die Filtervorrichtung (9) erfolgt.

6. Verfahren zur Herstellung von Brauwürze, optional mittels einer Brauvorrichtung (1) gemäß einem der vorigen Ansprüche, aufweisend
- gleichzeitiges Zuführen von Flüssigkeit, optional Wasser, und Malz, optional Malzschrot, zu einer Mischpumpe (3), optional einer High-Shear-Mischerpumpe, (S100)
- gleichzeitiges Mischen und Pumpen der zugeführten Flüssigkeit und des zugeführten Malzes mittels der Mischpumpe (3) unter Herstellen eines als Maische dienenden Flüssigkeit-Malz-Gemisches im Rahmen eines kontinuierlichen Pumpenvorgangs durch die Mischpumpe (3) hindurch (S200),
- Zuführen der im Rahmen des kontinuierlichen Pumpendurchlaufs durch die Mischpumpe (3) hergestellten Maische von der Mischpumpe (3) zu einer Filtervorrichtung (9), mittels welcher die Maische einem Filtervorgang unterzogen wird, mittels dessen ein in der Filtervorrichtung (9) verbleibender Filterkuchen und ein Filtrat erlangt werden (S300),
- Zuführen des erlangten Filtrats von der Filtervorrichtung (9) aus über eine Filtrat-Zuführleitung (19) zu einem Aufnahmebehälter (17) (S400),
- Rückführen des Filtrats von dem Aufnahmebehälter (17) aus über eine Filtrat-Rückführleitung (21) zur Filtervorrichtung (9) (S500),
- Pumpen, optional kontinuierliches Pumpen, des Filtrats mittels einer Pumpeneinrichtung (31) in einem Filtrat-Kreislauf (33), der von der Filtervorrichtung (9), der Filtrat-Zuführleitung (19), dem Aufnahmebehälter (17) und der Filtrat-Rückführleitung (21) gebildet wird, solange bis sich das im Filtrat-Kreislauf (33) via das Pumpen umlaufende, optional kontinuierlich umlaufende, Filtrat via gewünschten Stoffwechsel zu einer zur Weiterverarbeitung geeigneten Brauwürze umgewandelt hat (S600).

7. Verfahren gemäß Anspruch 6, wobei das Zuführen der im Rahmen des kontinuierlichen Pumpendurchlaufs durch die Mischpumpe (3) hergestellten Maische von der Mischpumpe (3) zur Filtervorrichtung (9) eine derart vorbestimmte Zeitdauer lang erfolgt, dass das Pumpen des Filtrats im Filtrat-Kreislauf (33) zeitlich zumindest größtenteils, optional komplett, erfolgt, ohne dass mittels der Maischepumpe (3) weiter Maische an die Filtervorrichtung (9) zugeführt wird.

8. Verfahren gemäß Anspruch 6 oder 7, wobei nach Erlangen der geeigneten Brauwürze diese entweder
- im als eine Würzepfanne (51) dienenden Aufnahmebehälter (17) zur Weiterhandlung für eine vorbestimmte Aufbewahrungszeit aufbewahrt wird, oder
- aus dem Filtrat-Kreislauf (33) entnommen und zu einer von dem Aufnahmebehälter (17) verschiedenen Würzepfanne (51) zur Weiterbehandlung zugeführt wird, wobei optional der Aufnahmebehälter (17) als rührwerkfreier Aufnahmebehälter (17) ausgebildet ist.

9. Verfahren gemäß einem der Ansprüche 6-8, wobei das in der Filtrat-Rückführleitung (21) vorliegende Filtrat während des Pumpens des Filtrats im Filtrat-Kreislauf (33) mittels einer Heizvorrichtung (71) beheizt wird, wobei optional die Temperatur des Filtrats gemäß einem gewünschten Temperaturprofil geregelt wird.

10. Verfahren gemäß einem der Ansprüche 6-9, wobei das Verfahren anhand einer Steuervorrichtung (41) in einer automatisiert gesteuerten Weise durchgeführt wird.
